## Europäisches Patentamt
## European Patent Office
## Office européen des brevets

(19)

(11) Veröffentlichungsnummer: **0 307 394 B1**

# (12) EUROPÄISCHE PATENTSCHRIFT

(45) Veröffentlichungstag der Patentschrift:
26.06.91 Patentblatt 91/26

(51) Int. Cl.⁵: **B65G 47/44,** B65G 21/14,
B65G 39/10

(21) Anmeldenummer: 87902087.3

(22) Anmeldetag: 04.04.87

(86) Internationale Anmeldenummer:
PCT/EP87/00186

(87) Internationale Veröffentlichungsnummer:
WO 87/06917 19.11.87 Gazette 87/25

(54) FÖRDERANLAGE MIT ABWURFTROMMEL.

(30) Priorität: 10.05.86 DE 3615769

(43) Veröffentlichungstag der Anmeldung:
22.03.89 Patentblatt 89/12

(45) Bekanntmachung des Hinweises auf die
Patenterteilung:
26.06.91 Patentblatt 91/26

(84) Benannte Vertragsstaaten:
AT BE CH DE FR GB IT LI LU NL SE

(56) Entgegenhaltungen:
US-A- 2 781 892
US-A- 3 680 681
US-A- 3 807 549

(73) Patentinhaber: O & K ORENSTEIN & KOPPEL
AG
Brunsbütteler Damm 144-208
W-1000 Berlin 20 (DE)

(72) Erfinder: MOHR, Helmut
Mendelstr. 4
W-4100 Duisburg 46 (DE)

## Beschreibung

Die Erfindung betrifft eine Förderbandanlage zur Verstellung der Fallparabel des Fördergutes, umfassend eine, an einem Förderbandträger angebrachte Umlenktrommel und eine, in Bandlaufrichtung gesehen, die Neigung des Bandendes bestimmende, höhenverstellbare Ablenktrommel, die beiderseitig an Schwenkhebeln gelabert ist.

Bei bekannten Förderbandanlagen sind die Abwurftrommeln und die ihr unmittelbar vorgeschalteten Tragrollen am vorderen Ende des Bandträgers fest gelagert. Da weiterhin die Bandgeschwindigkeit der Förderbandanlage im allgemeinen festliegt, ist eine Anderung der Fallparabel während des Betriebs der Bandförderanlage praktisch nicht möglich. Die unveränderbare Fallparabel ist bei Bandanlagen, insbesondere bei der Förderung von klebrigem, staubigem oder zu Brückenbildung neigendem Fördergut, nachteilig.

Die DE-B 11 12 010 zeigt ein Bandschleifengerät zum Abwerfen des Gutes von Bandstraßen mit einem die Bandschleife tragenden Gerüst, das auf einem beweglichen Untergestell ruht. Dabei wirkt die Umlenktrommel bei der Verwendung als Bandschleifenwagen als Abwurftrommel. In Förderrichtung gesehen, liegt hinter der Abwurftrommel eine Schleifentrommel, die die Rückführung des Gurtes in die übliche Schleifenform besorgt. Soll die Umlenktrommel nicht mehr als Abwurftrommel wirksam sein, muß die Schleifentrommel entfernt werden. Dann läuft das Förderband in einem Zuge über die nunmehr absenkbare Umlenktrommel in normaler Bandführung weiter. Dabei ist die Umlenktrommel, die zeitweise als Abwurftrommel wirken kann, am Ende eines schwenkbar angelenkten Kopfstückes des Bandträgers gelagert. Das Kopfstück ist mittels Bolzen an dem Bandschleifengerüst befestigt und kann mit einer geeigneten Hubvorrichtung gesenkt und gehoben werden. Offenbar trägt das Kopfstück weitere Bolzen für die Abstützung des Förderbandes, die jedoch gegenüber dem Kopfstück in ihre Lage festliegen und nur gemeinsam mit diesen angehoben bzw. gesenkt werden können.

Die US-A 2,781,892 offenbart einen verhältnismäßig kurzen Bandförderer, auf welchem auf der einen Seite Material über eine Schurre aufgegeben wird, welches auf der anderen Seite durch das mit einer vorgegebenen Geschwindigkeit umlaufende Band abgeworfen wird. Zur Einstellung unterschiedlicher Abwurfwinkel ist mit gewissem Abstand zur Umlenkrolle oberhalb des Bandes eine zweiseitig gelagerte Druckrolle vorgesehen. Über Verstellsowie Rückstellmechanismen besteht die Möglichkeit, das Band in Richtung des Untertrums zusammenzudrücken, wobei sich je nach Grad des Druckes eine entsprechende Neigung des Bandes in Richtung der Umlenkrolle ergibt. Nachteile dieser Ausgestaltung sind im wesentlichen darin begründet, daß die Druckrolle zweigeteilt it, wobei die beiden Teile mittels eines Verbindungselementes untereinander verbunden sind, wobei ausschließlich die beiden äußeren Bereiche der geteilten Druckrolle auf dem Förderband aufliegen. Da der Gurt üblicherweise flexibel ausgestaltet ist, werden die beiden auf den Gurträndern aufliegenden Druckrollenbereiche den Gurt zwar in diesen Bereichen nach unten drücken, der mittlere Bereich wird sich jedoch so gut wie kaum verformen und in Abhängigkeit vom Druck an der Verbindung zur Anlage kommen. Ein Materialtransport scheint somit ausgeschlossen bzw. in nur verhältnismäßig dünnen Schichten realisierbar.

Der Erfindung liegt ausgehend von der US-A 2,781,892 die Aufgabe zugrunde, mit einfachen Mitteln die Möglichkeit zu schaffen, die Fallparabel hinter einer Abwurftrommel einer Förderbandanlage während des Betriebes zu ändern, so daß die Fallparabel unterschiedlichen Fördergutarten angepaßt werden kann bzw. auf eine bestimmte Fallparabel eingestellt werden kann.

Diese Aufgabe wird erfindungsgemäß dadurch gelöst, daß das endlose Förderband über die Ablenktrommel geführt ist, und die Schwenkhebel, entgegen der Bandförderrichtung gesehen, im Abstand vor der Umlenktrommel am Bandträger gelagert sind, wobei sich zwischen den freien Enden der Schwenkhebel und dem Bandträger Hydraulikzylinder erstrecken, und daß, in Laufrichtung des Förderbandes gesehen, das vordere Ende des Tragrollenträgers mit sich auf den die Ablenktrommel tragenden Schwenkhebeln abstützenden Stützrollen versehen ist, und daß der Tragrollenträger an seinem anderen Ende gelenkig mit dem, in Laufrichtung des Förderbandes gesehen, davorliegenden Tragrollenträger bzw. mit dem Bandträger verbunden ist.

Bei der erfindungsgemäßen Vorrichtung kann – in Förderrichtung gesehen, vor der Abwurftrommel – die Neigung des Förderbandes vor dessen Auflaufen auf die Umlenktrommel verstellt und damit die Fallparabel eingestellt werden. Der Fordergurt wird je nach der einstellbaren Höhenlage der Ablenktrommel vor der Umlenk- bzw. Antriebstrommel in unterschiedlichem Maße nach unten geführt. Mit der Einstellbarkeit der Neigung des vor der Umlenktrommel abfallenden Gurtabschnittes kann die Fallparabel eingestellt werden. Dadurch kann die Fallparabel so gewählt werden, daß beispielsweise bei klebrigem Fördergut eine einwandfreie Fördergutübergabe erfolgt. Eine Brückenbildung im Bereich des abfallenden Gutes kann vermieden werden. Andererseits läßt sich auch bei der Förderung von staubigem Gut durch Einstellen der Fallparabel die Staubentwicklung vermindern. Insbesondere auch dieser Aufgabe dienen die weiteren Maßnahmen gemäß der Unteransprüche, bei der die Körperschallentwicklung durch eine elastische Lagerung des Bandträgers auf dem Bandgerüst auf ein Minimum reduziert wird.

Weitere Einzelheiten der Erfindung sind anhand des in der Zeichnung schematisch dargestellten Ausführungsbeispieles erläutert und zwar zeigen

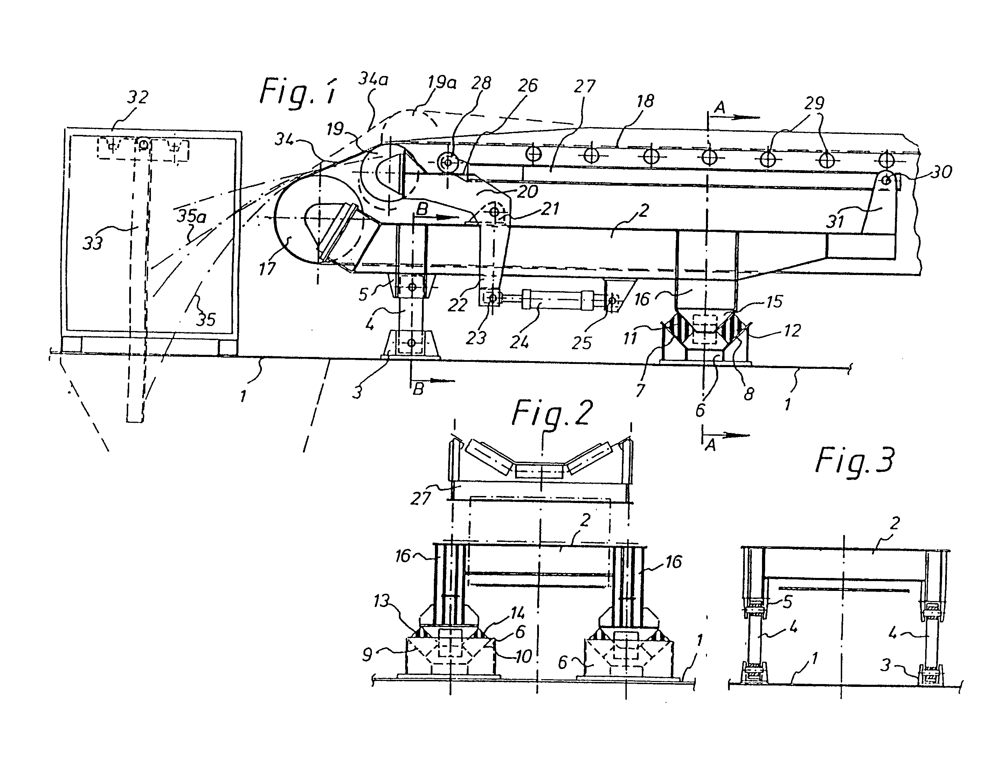

Fig. 1 – das Ende einer Bandstraße mit Abwurftrommel in Seitenansicht

Fig. 2 – einen Schnitt in der Ebene A-A

Fig. 3 – einen Schnitt in der Ebene B-B

Auf dem Bandfundament 1 ist das vordere Ende des Bandträgers 2 abgestützt. Dazu trägt das Bandfundament 1 einem an seinem vorderen Ende eine Stützbock 3 zur Lagerung einer Gelenkstütze 4, die sich auf ihrer anderen Seite in dem Stützbock 5 am Bandträger 2 abstützt.

Desweiteren trägt das Bandfundament 1 einen Stützbock 6, der mit vier die Flächen einer Pyramide bildenden Stützflächen 7, 8, 9, 10 versehen ist.

Diesen pyramidenförmig angeordneten Stützflächen 7, 8, 9, 10 liegen Gummipuffer 11, 12, 13, 14 an, auf denen sich ein ebenfalls als vierseitige Pyramide ausgebildeter Stützteil 15 eines weiteren Stützbockes 16 abstützt, der an dem Bandträger 2 befestigt ist.

Der Bandträger 2 ist jeweils über zwei der bisher beschriebenen Stützvorrichtungen gegenüber dem Bandfundament 1 abgestützt, die beidseitig des Bandträgers 2 liegen.

Der Bandträger 2 trägt an seinem vorderen Ende die Antriebs- und Umlenktrommel 17, deren Lagerung und Antriebe im einzelnen nicht dargestellt sind. Über diese Umlenktrommel 17 ist das Förderband 18 geführt, das, in Förderrichtung gesehen, kurz vor der Umlenktrommel 17 von einer Ablenktrommel 19 unterstützt ist. Diese ist beidseitig in Schwenkhebeln 20 gelagert, die als Doppel- bzw. Winkelhebel ausgebildet sind. Diese Winkelhebel sind in weiteren Stützböcken 21 am Bandträger 2 gelagert und tragen mit ihrem anderen Hebelarm 22 unter oder über das Gerüst des Bandträgers 2 nach unten oder oben heraus. Dort sind an den Schwenkhebeln 20 in den Gelenkpunkten 23 Hydraulikzylinder 24 angelenkt, deren andere Seite bei 25 am Bandträger 2 angelenkt ist.

Auf dem oberen Teil der Schwenkhebel 20 stützt sich auf den Ablaufflächen 26 der letzte Tragrollenträger 27 über Stützrollen 28 ab. Der letzte Tragrollenträger 27, der die Tragrollen 29 trägt, ist an seinem anderen Ende im Lager 30 an einem Stützbock 31 des Bandträgers 2 gelenkig abgestützt.

Der Umlenktrommel 17 gegenüber befindet sich das Traggerüst 32 für das in unterschiedlichem Abstand von der Umlenktrommel 17 aufhängbare Prallblech 33. Das Prallblech ist in einer mittleren Stellung dargestellt.

Mit Hilfe des Hydraulikzylinders 24 können die beiden Schwenkhebel 20 gekippt werden, wodurch die Ablenktrommel 19 in unterschiedlicher Höhenstellung eingestellt werden kann, wie beispielsweise in gestrichelter Linienführung 19a angedeutet. Entsprechend der unterschiedlichen Höhe der Ablenktrommel 19 kann das unmittelbar vor der Umlenktrommel 17 befindliche Bandende 34 in unterschiedlichen Neigungen eingestellt werden, wie z.B. in der strichpunktierten Lage 34a. Entsprechend der unterschiedlichen Neigung dieser Bandteile ergeben sich unterschiedliche Fallparabeln 35, 35a etc.

## Ansprüche

1. Förderbandanlage zur Verstellung der Fallparabel (35, 35a) des Fördergutes, umfassend eine, an einem Förderbandträger (2) angebrachte Umlenktrommel (17) und eine, in Bandlaufrichtung gesehen, die Neigung des Bandendes bestimmende, höhenverstellbare Ablenktrommel (19) die beiderseitig an Schwenkhebeln (20) gelagert ist, dadurch gekennzeichnet, daß das endlose Förderband (18) über die Ablenktrommel (19) geführt ist, und die Schwenkhebel entgegen der Bandförderrichtung gesehen, im Abstant vor der Umlenktrommel (17) am Bandträger (2) gelagert sind, wobei sich zwischen den freien Enden (22) der Schwenkhebel und dem Bandträger (2) Hydraulikzylinder (24) erstrecken, und daß, in Laufrichtung des Förderbandes (18) gesehen, das vordere Ende des Tragrollenträgers (27) mit sich auf den die Ablenktrommel (19) tragenden Schwenkhebeln (20) abstützenden Stützrollen (28) versehen ist, und daß der Tragrollenträger (27) an seinem anderen Ende gelenkig (30) mit dem, in Laufrichtung des Förderbandes (18) gesehen, davorliegenden Tragrollenträger bzw. mit dem Bandträger (2) verbunden ist.

2. Förderbandanlage nach Anspruch 1, dadurch gekennzeichnet, daß die Schwenkhebel (20) ober- oder unterhalb des Bandträgers (2) miteinander zu einem Doppelhebel verbunden sind, an dessen freien Hebelenden (22) die Hydraulikzylinder (24) angreifen.

3. Förderbandanlage nach den Ansprächen 1 und 2, dadurch gekennzeichnet, daß der Bandträger (2) auf einem Stückblock (16) sowohl in Bandrichtung als auch quer dazu elastisch gelagert ist.

4. Förderbandanlage nach dem Ansprüchen 1 bis 3, dadurch gekennzeichnet, daß der Stützblock (16) mit Stützflächen (7, 8, 9, 10) versehen ist, wobei deren Gegenlager jeweils in Form einer vierseitigen Pyramide ausgebildet und zwischen Bauteilen, wie Gummipuffern (11, 12, 13, 14), angeordnet ist.

5. Förderbandanlage nach einem der Ansprüche 1 bis 4, dadurch gekennzeichnet, daß der Bandträger (2) sich zusätzlich über eine Gelenkstütze (4) auf einem Förderbandfundament (1) abstützt, welche Gelenkstütze (4), in Bandförderrichtung gesehen, hinter der elastischen Abstützung angeordnet ist.

6. Förderbandanlage nach Anspruch 5, dadurch gekennzeichnet, daß die Gelenke der Gelenkstütze (4) als Gummibolzenlagerungen ausgebildet sind.

**Claims**

1. Belt conveyor arrangement for adjusting the fall parabola (35, 35a) of the goods being conveyed, comprising a return pulley (17) mounted on a conveyor belt support (2) and a deflecting pulley (19) which, seen in the direction of travel of the belt, determines the inclination of the end of the belt, is adjustable in height, and which is supported on both sides on pivoted levers (20), characterised in that the endless conveyor belt (18) is guided by way of the deflecting pulley (19), and the pivoted levers are supported on the belt support (2) at a distance in front of the return pulley (17), seen opposite to the conveying direction of the belt, hydraulic cylinders (24) extending between the free ends (22) of the pivoted levers and the belt support (2), and that, seen in the direction of travel of the conveyor belt (18), the front end of the carrying roller support (27) is provided with support rollers (28) bearing on the pivoted levers (20) carrying the deflecting pulley (19), and that the carrying roller support (27), at its other end, is hinged (30) onto the carrying roller support situated before it, seen in the direction of travel of the conveyor belt (18), or onto the belt support (2).

2. Belt conveyor arrangement according to Claim 1, characterised in that the pivoted levers (20) are connected to each other above or below the belt support (2) to form a double lever, with the free lever ends (22) of which the hydraulic cylinders (24) engage.

3. Belt conveyor arrangement according to Claims 1 and 2, characterised in that the belt support (2) is resiliently supported on a support block (16) both in the belt direction and also at right-angles thereto.

4. Belt conveyor arrangement according to Claims 1 to 3, characterised in that the support block (16) is provided with support surfaces (7, 8, 9, 10), the complementary bearing thereof being in each case in the form of a four-sided pyramid and arranged between components such as rubber cushions (11, 12, 13, 14).

5. Belt conveyor arrangement according to one of Claims 1 to 4, characterised in that the belt support (2) additionally bears on a belt conveyor base (1) by way of an articulated support (4) which, seen in the conveying direction of the belt, is arranged behind the resilient supporting arrangement.

6. Belt conveyor arrangement according to Claim 5, characterised in that the joints of the articulated support (4) are in the form of rubber bolt bearing means.

**Revendications**

1. Installation de transport à bande sur laquelle la parabole de chute (35, 35a) de la matière déchargée est réglable, comprenant un tambour de renvoi (17) disposé sur une structure porte-bande (2) et un tambour de déviation (19) réglable en hauteur, déterminant l'inclinaison de l'extrémité de la bande et monté rotatif, par les deux côtés, sur des leviers oscillants (20), caractérisée en ce que la bande transporteuse (18), qui est une bande sans fin, est guidée par-dessus le tambour de déviation (19) et les leviers oscillants sont montés sur la structure porte-bande (2), à distance devant le tambour de renvoi (17), en sens contraire à la direction de transport de la bande, avec disposition de vérins hydrauliques (24) entre les extrémités libres (22) des leviers oscillants et la structure porte-bande (2), que l'extrémité antérieure, dans le sens de circulation de la bande transporteuse (18), du châssis (27) supportant les rouleaux porteurs de bande, est munie de galets d'appui (28) qui reposent sur les leviers oscillants (20) portant le tambour de déviation (19), et que le châssis (27), avec les rouleaux porteurs de bande, est articulé à son autre extrémité (30) sur le châssis à rouleaux porteurs qui le précède dans le sens de circulation de la bande transporteuse (18), ou sur la structure porte-bande (2).

2. Installation de transport selon la revendication 1, caractérisée en ce que les leviers oscillants (20) sont reliés entre eux, au-dessus ou au-dessous de la structure porte-bande (2), de manière à former un levier double dont les extrémités libres (22) sont attaquées par les vérins hydrauliques (24).

3. Installation de transport selon les revendications 1 et 2, caractérisée en ce que la structure porte-bande (2) est supportée élastiquement, tant en direction de la bande que transversalement à celle-ci, à l'aide d'un bloc d'appui (16).

4. Installation de transport selon les revendications 1 à 3, caractérisée en ce que le bloc d'appui (16) est pourvu de faces d'appui (7, 8, 9, 10) qui coopèrent avec un support ayant la forme d'une pyramide à quatre faces, avec interposition d'éléments tels que des amortisseurs en caoutchouc (11, 12, 13, 14).

5. Installation de transport selon une des revendications 1 à 4, caractérisée en ce que la structure porte-bande (2) s'appuie en outre sur une fondation (1) de transporteur par l'intermédiaire d'un pied articulé (4) qui est disposé derrière l'appui élastique dans le sens du transport de la bande.

6. Installation de transport selon la revendication 5, caractérisée en ce que les articulations du pied articulé (4) sont réalisées comme des montures à axes en métal-caoutchouc.

Fig. 1

Fig. 2

Fig. 3